# EUROPEAN PATENT APPLICATION

(11) **EP 1 662 228 A1**
(43) Date of publication of application: **31.05.2006**
(21) Application number: 04027566.1
(22) Date of filing: 19.11.2004
(51) Int. Cl.: G01C 11/02

(54) **Scanning of three-dimensional objects**

(71) Applicant: Harman Becker Automotive Systems GmbH, 76307 Karlsbad (DE)
(72) Inventor: Strassenburg-Kleciak, Marek, 22359 Hamburg (DE)
(74) Representative: Grünecker, Kinkeldey, Stockmair & Schwanhäusser Anwaltssozietät

(57) **Abstract**

The present invention relates to method and system for scanning a three-dimensional object comprising scanning a surface of the object from a first scanning position, generating a first scanning sample comprising a point cloud having data points corresponding to positions on the surface of the object; determining the coordinates of the first scanning position by a satellite based positioning system, correcting the inaccuracy of the positioning system by using an additional error signal; scanning the surface of a three-dimensional object from at least one further scanning position, generating at least one further scanning sample comprising such a point cloud; determining the coordinates of the at least one further scanning position by the positioning system, again correcting the inaccuracy of the positioning system; registering the first and the at least one further scanning samples based on the first and the at least one further scanning positions, such that the samples are oriented relatively to each according to the orientation of the respective surfaces of the three-dimensional object.

## Description

### Field of Invention

The present invention relates to a method and a system for scanning topographical objects and, in particular, for scanning and orientating data samples obtained by multiple scans of three-dimensional objects.

### Prior Art

The detection and collection of topographical data of land masses as well as discrete three-dimensional objects is of relevance for a wide variety of applications. Cartography, natural resource management, e.g., in mining, environmental surveillance and road construction, among other applications, depend on accurate and updated topographical information.

The most conventional method of collecting topographical data is the manual measurement by tape measures and previously surveyed ground control marks, which is very tedious, time consuming and error-prone.

Another method for gathering field data is aerial photogrammetry that employs stereo photography. According to this method stereoscopic images have to be taken from desired objects and the resulting photographs have to be registered manually or in a computer-aided way. The data reduction and preparation has to be performed or controlled by specially trained operators.

Terrestrial or airborne laser scanning represents a more recently developed technique for collecting topographical data. Laser scanning systems comprise a combination of a range measuring means and a direction measuring means.

To determine the position of a target point in addition to the distance the horizontal and vertical directions have to be determined. Therefore the laser beam has to be deflected. There are generally two methods to deviate the laser beam. Either the whole scanning unit is rotated by stepping motors or the laser beam is deviated by rotating mirrors. The recording of the vertical and horizontal angle of the emitted / received laser beam enables the calculation of the required directions. The combination of range and direction measurement provides the position of a target point.

Airborne laser scanning systems as well as airborne radar interferometry usually suffer from deficiencies in accuracy, in particular, in the case of three-dimensional objects that exhibit overhangs.

In particular, in the case of terrestrial laser scanning a usual problem lies in the necessity to combine multiple scan data, provided in form of point clouds, appropriately, i.e. to register the different scanned field of views. Conventionally, the registration is performed manually by the respective translational and rotational operations. Computer-aided registration may improve the performance of the registration process and usually relies on the identification of characteristic points (passing points) that may represent physical reflectors distributed in the desired topographic area. More elaborated algorithms work by synthesizing three-dimensional surfaces from the collected point clouds.

However, the scanning systems of the art still suffer from a limited accuracy.

### Description of the Invention

It is therefore the object of the present invention to provide a method and a system for topographical laser scanning with an improved accuracy and characterized by relatively low costs.

The problem is solved by the method according to Claim 1 and the system according to claim 10. The inventive method for laser scanning comprises the steps of
scanning a surface of a three-dimensional object from a first scanning position, such that a first scanning sample, comprising a point cloud comprising data points representing corresponding positions on the surface of the three-dimensional object, is generated;
determining the coordinates of the first scanning position by means of a satellite based positioning system, wherein the inaccuracy of the positioning system is corrected by using an additional error signal;
scanning a surface of a three-dimensional object from at least one further scanning position, such that at least one further scanning sample, comprising a point cloud comprising data points representing corresponding positions on the surface of the three-dimensional object, is generated;
determining the coordinates of the at least one further scanning position by means of a satellite based positioning system, wherein the inaccuracy of the positioning system is corrected by using an additional error signal;
registering the first scanning sample and the at least one further scanning sample based on the first scanning position and the at least one further scanning position, such that the samples are oriented relatively to each other according to the orientation of the respective surfaces of the three-dimensional object.

The temporal succession of the different steps of the inventive method can be chosen arbitrarily. During the scanning process preferably the time delays of the emitted and the reflected scanning beams at the first scanning position and at the at least one further scanning position as well as the angular orientation of the scanning beams at the first scanning position and at the at least one further scanning position are measured.

The data points that represent corresponding position on the surface of the scanned object represent coordinates that may be coordinates of a local coordinate system of the scanning device by which the scanning of a surface of a three-dimensional object is performed.

The coordinates determined by the satellite based positioning system may be some relative coordinates in an arbitrary coordinate system or, advantageously, world coordinates. Preferably, the method provides the user with the geographic longitude and latitude of the scanning position.

Since satellite based positioning systems may exhibit some known inaccuracy, a signal error may advantageously be used to compensate as good as possible for the systematic errors in location. In particular, in addition to the radio transmitted location information correction data can be received.

No employment of passing points is necessary according to the present invention. Moreover, the scanning results can be readily checked on-position and, if necessary, may be supplemented by further scanning samples.

The registering process, i.e. the orientation of the several scanning samples according to real spatial arrangement of the different scanned parts of the three-dimensional object, is highly improved by the precise location of the scanning positions. The recorded three-dimensional structure can be further processed for imaging by any desired software means known from the art. Realistic three-dimensional models can, thus, be provided for objects and topographical features with a high precision.

According to one embodiment of the inventive method, the satellite based positioning system, wherein the inaccuracy of the positioning system is corrected by using an additional error signal, comprises a Differential Global Positioning System (DGPS).

Although the well-known Navstar Global Positioning System (GPS) is considerably more accurate than most other radio navigation systems, it is subject to undesirable limitations. First, the satellite signals are subject to distortion effects and delays due to atmospheric turbulences. Second, since the Navstar satellites are primarily designed for military purposes the accuracy of the GPS signals is intentionally reduced for civilian users.

When GPS signals are received at well-known positions, the inaccuracy of the GPS signals can be determined exactly and can be used to provide for a correction signal. Differential GPS (DGPS) systems are mainly based on the transmission of such correction signals. The German National Survey Satellite Positioning Service (SAPOS), e.g., provides position information with accuracy of some cm. Another planned European DGPS is known under the name EUROPOS.

Three-dimensional scanning aided by DGPS position can accordingly be carried out with an accuracy of some cm both in the horizontal and the vertical directions. Even extended structures as big cities can, in principle, be mapped and modeled in a three-dimensional way with a previously unknown preciseness.

Advantageously, to facilitate the registering process the first scanning position can chosen to be a reference point of the point cloud of the first scanning sample and the at least one further scanning position is chosen to be a reference point of the point cloud of the at least one further scanning sample.

The registering may comprise translational and/or rotational operations applied to the first and the at least one further point clouds and, in particular, translational and/or rotational operations applied to the first and the at least one further point clouds are performed with respect to the reference point of the point cloud of the first scanning sample and the reference point of the point cloud of the at least one further scanning sample.

Whereas the geographical coordinates of the scanning system can be determined exactly by the DGPS, the system can horizontally be adjusted by the help of some sensor means. If this adjustment is kept fixed for several scans registering, can be performed by appropriate rotations of the scanning samples only.

Advantageously, the scanning direction at each scanning position can be measured by means of a compass. The determination of the scanning directions with respect to the magnetic north pole may facilitate and fasten the registering process.

The scanning may be performed by a laser beam or a radio beam or a microwave beam or an infrared beam or an ultrasound beam.

Suitable scanning means that can be employed by the present inventive method include a last pulse scanning means, a time-of-flight laser scanner as well as a phase-shift laser scanner.

According to the last pulse scanning method the reflection signal coming from the last point encountered by the emitted scanning beam is used for obtaining the scanning data.

The range measurement can be performed either by the "time of flight" or by the "phase difference" method.

The time of flight method is a practical principle of measuring distances using, e.g., a short wave laser beam emitted usually by a semiconductor laser. A pulsed laser beam may advantageously be emitted and at the moment of emission a time counter is started. The emitted beam hits the surface of a target and is partially reflected to the detector. At the moment of detection the time counter is stopped. The time for passing the double of the distance between the sensor and the target is measured. The real distance is calculated by a microcomputer inside the scanner using the know speed of light. By employing a last pulse measuring technique one, in addition, can guarantee that the desired echo from the last target of a particular beam is detected.

According to the phase difference method, the distance between the scanning system and the target is determined from a shift of the phase of a continuous sinusoidal laser signal. The shift is caused by the reflection of the beam on the surface of the target. The distance between point and sensor is directly proportional to this shift.

Furthermore, the invention provides a system; comprising
scanning beam emitting means for emitting a scanning beam;
scanning means for moving the scanning beam across the surface of a three-dimensional object;
detecting means for detecting the reflected scanning beam; and
receiver for a satellite based positioning system, wherein the inaccuracy of the positioning system is corrected by using an additional error signal for determining the position of the scanning system.

Preferably, an error or correction signal can be received together with the location information. The satellite based positioning system, wherein the inaccuracy of the positioning system is corrected by using an additional error signal, may comprise a DGPS.

The inventive system advantageously may also comprise means for generating point clouds of the scanned data; storage means for storage of scanning samples comprising point clouds; and means for registering different point clouds contained in different scanning samples using position information provided by the satellite based positioning system, as, e.g., a DGPS.

According to alternative embodiments the inventive method and system can employ a scanning beam that is a laser beam or a radio beam or a microwave beam or an infrared beam or an ultrasound beam.

The scanning beam emitting means may be configured to emit a pulsed scanning beam and the detecting means may be configured to detect a last pulse reflection of the scanning beam.

According to other embodiments of the present inventive system, the scanning beam emitting means can be configured to emit a laser beam as a scanning beam and the scanning system can be configured to operate as a time-of-flight laser scanning means or a phase-shift laser scanning means.

Furthermore, the present invention provides a computer program product, comprising one or more computer readable media having computer-executable instructions for performing the step of registering of the scanning samples of the three-dimensional objects.

Additional features and advantages of the present invention will be described with reference to the drawings. In the description, reference is made to the accompanying figures that are meant to illustrate preferred embodiments of the invention. It is understood that such embodiments do not represent the full scope of the invention that is defined by the claims given below.

Figure 1 shows four two-dimensional cuts of samples of scan data before and after registration.

Figure 2 illustrates a three-dimensional scanning means equipped with a DGPS receiver according to the present invention.

Figure 3 illustrates the functionality of the system for scanning three-dimensional objects according to the present invention.

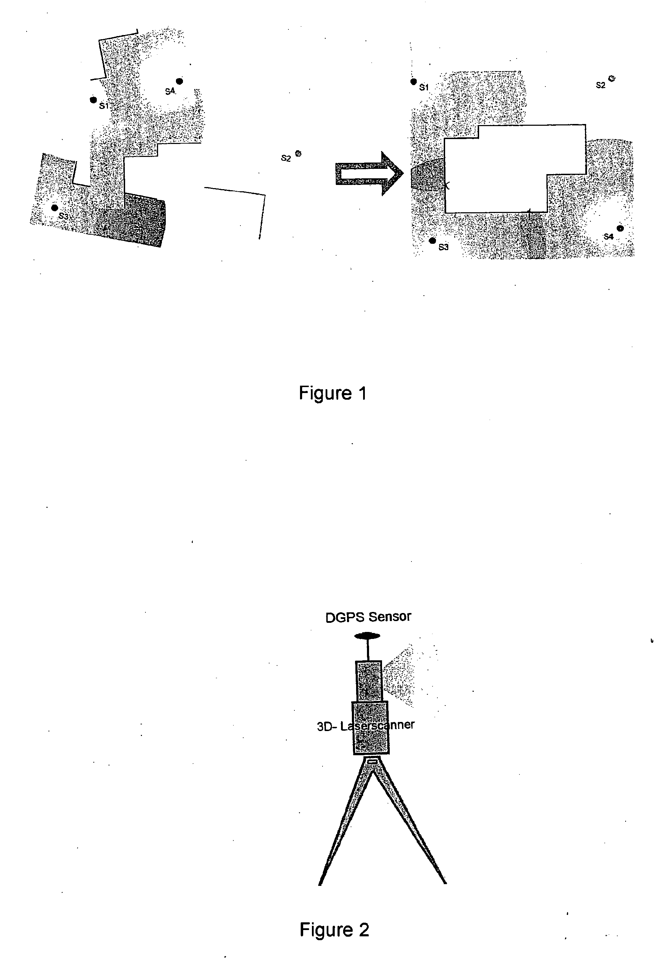

Figure 1 shows on the left-hand side two-dimensional cuts of four individual samples of scan data obtained from different terrestrial scanning positions s1, s2, s3 and s4. The density and distribution of data points depend on pre-determined parameters as, e.g., the sampling rate, the scan angle and the scan frequency. The scanned partial contours of the scanned object, which in this example is a building with a shape comprising two overlapping rectangles, are mismatched. Some coarse first registration may be performed on-position by measuring the respective scanning directions by means of a compass.

After proper registration the complete contour of the building can easily be identified (right-hand side of Figure 1). The proper registration depends on precise information on the positions at which the respective scanning has been carried out. According to the present invention the geographical coordinates of the scanning means, which according to one advantageous embodiment is a laser scanner, can precisely be determined by a differential GPS (DGPS) device. The position of the scanning means represents a reference point of the respective recorded point cloud.

One should note that besides the range values also reflectance values are desirably measured by the same receiver at the same time so that both kinds of values directly correspond to one single point in data space.

The obtained point clouds have typically to be reduced to obtain a capable model of scanned three-dimensional objects. A variety of commercial software applications, e.g., based on reflectance values, are available for this purpose. The reduced data may be further provided for (Computer Aided Design) CAD applications.

Figure 2 illustrates a three-dimensional scanning means equipped with a DGPS receiver according to an embodiment of the present invention. The scanning means may advantageously be placed on a tripod, as indicated in Figure 2, and comprises, e.g., a pulsed laser, a receiver, as a photodiode receiver, and some means for time measuring to determine the time interval between the transmitted and the received signal (time of flight) as well as a computational means for signal processing. The time measurement is converted to a distance by simply calculating (speed of light x time of flight) / 2.

Preferably, the scanning device is built into a theodolite that provides accurate horizontal and vertical angles offsets to the point concurrently illuminated by the laser. Range and angle data may be recorded automatically or immediately transformed to Cartesian coordinates relative to the instrument axis.

Precedent to the scanning process the scanner may preferably be horizontally adjusted employing sensor means known from the art. If the horizontal scanning position is kept fixed during the different scanning operations at different places, it is sufficient to calculate, manually or in a computer-aided way, the proper registration by determining the respective rotation angles for the different samples of scan data obtained at the respective positions that are known with a high precision due to the employment of the DGPS.

In Germany, for example, it is the German National Survey Satellite Positioning Service (SAPOS) that provides a DGPS. SAPOS provides by means of permanently operating reference stations of Global Navigation Satellite Systems correction data for real-time GPS data, that are limited in accuracy in the public course acquisition code, as well as original observation data for GPS post-processing in internationally standardized data formats. The SAPOS HEPS, e.g., represents a service that transmits correction data via VHF transmitters for real-time position fixing with an accuracy of some cm. The service locally is even available via the Global System for Mobile Communication.

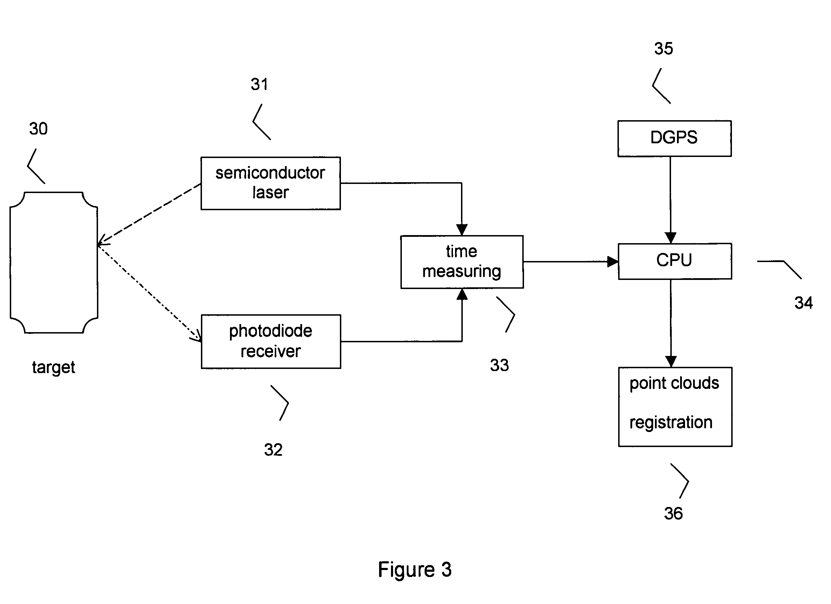

Figure 3 illustrates the functionality of the inventive system for scanning topographical objects. Some desired three-dimensional target 30 is illuminated by a semiconductor laser 31. By means of a rotating mirror the laser is scanning the target row by row with an angular resolution of, e.g., 0,02°.

The reflected beam is detected by a photodiode receiver 32. Besides direction and range information the intensity of the reflected signal is also sensored. The intensity value may be saved as an 8 bit information entity and accordingly the points constituting the point clouds processed by a CPU 34 can be displayed in gray scales.

Some time measuring means 33 measures the time-of-flight and provides the CPU 34 with the according data. The CPU 34 calculates the range to the scanned object. In order to create a three-dimensional model of the target 30, it has to be scanned from different scanning positions. The DGPS receiver 35 employed according to the present invention provides the CPU 34 with the positions of the scanning means during the respective scanning processes.

The CPU 34 calculates the point clouds 36 resulting from multiple individual beam reflections during one single scanning process and stores the results as a scanning sample. Several scanning samples are obtained from several scanning processes. The resulting set of point clouds has to be registered. Based on the highly accurate position information, the CPU 34 can efficiently assist an operator in the registration 36 of the point clouds of the different scanning samples.

## Claims

1. Method for scanning a three-dimensional object, comprising
scanning a surface of a three-dimensional object from a first scanning position, such that a first scanning sample, comprising a point cloud comprising data points representing corresponding positions on the surface of the three-dimensional object, is generated;
determining the coordinates of the first scanning position by means of a satellite based positioning system, wherein the inaccuracy of the positioning system is corrected by using an additional error signal;
scanning a surface of a three-dimensional object from at least one further scanning position, such that at least one further scanning sample, comprising a point cloud comprising data points representing corresponding positions on the surface of the three-dimensional object, is generated;
determining the coordinates of the at least one further scanning position by means of a satellite based positioning system, wherein the inaccuracy of the positioning system is corrected by using an additional error signal;
registering the first scanning sample and the at least one further scanning sample based on the first scanning position and the at least one further scanning position, such that the samples are oriented relatively to each other according to the orientation of the respective surfaces of the three-dimensional object.

2. Method according to Claim 1, wherein satellite based positioning system, wherein the inaccuracy of the positioning system is corrected by using an additional error signal, comprises a differential Global Positioning System (DGPS).

3. Method according to one of the preceding claims, wherein the first scanning position is chosen to be a reference point of the point cloud of the first scanning sample and the at least one further scanning position is chosen to be a reference point of the point cloud of the at least one further scanning sample.

4. Method according to one of the preceding claims, wherein the registering comprises translational and/or rotational operations applied to the first and the at least one further point clouds.

5. Method according to Claim 3, wherein the registering comprises translational and/or rotational operations applied to the first and the at least one further point clouds and the translational and/or rotational operations applied to the first point cloud is performed with respect to the reference point of the point cloud of the first scanning sample and the translational and/or rotational operations applied to the at least one further point clouds is performed with respect to the reference point of the point cloud of the at least one further scanning sample.

6. Method according to one of the preceding claims, further comprising measuring the scanning direction at each scanning position by means of a compass.

7. Method according to one of the preceding claims, wherein the scanning is performed by a laser beam or a radio beam or a microwave beam or an infrared beam or an ultrasound beam.

8. Method according to one of the Claims 1 - 7 wherein the scanning is performed by a last pulse scanning means.

9. Method according to one of the Claims 1 - 6 or Claim 8, wherein the scanning is performed by a time-of-flight laser scanner or a phase-shift laser scanner.

10. Scanning system, comprising
scanning beam emitting means for emitting a scanning beam;
scanning means for moving the scanning beam across the surface of a three-dimensional object;
detecting means for detecting the reflected scanning beam; and
receiver for a satellite based positioning system, wherein the inaccuracy of the positioning system is corrected by using an additional error signal for determining the position of the scanning system.

11. System according to Claim 10, wherein the satellite based positioning system, wherein the inaccuracy of the positioning system is corrected by using an additional error signal, comprises a DGPS.

12. System according to Claim 10 or 11, further comprising
means for generating point clouds of the scanned data;
storage means for storage of scanning samples comprising point clouds; and
means for registering different point clouds contained in different scanning samples using the information on the position of the scanning system provided by the satellite based positioning system, wherein the inaccuracy of the positioning system is corrected by using an additional error signal.

13. System according to one of the Claims 10 - 12, wherein the scanning beam is a laser beam or a radio beam or a microwave beam or an infrared beam or an ultrasound beam.

14. System according to one of the Claims 10 - 13, wherein the scanning beam emitting means is configured to emit a pulsed scanning beam and the detecting means is configured to detect a last pulse reflection of the scanning beam.

15. System according to one of the Claims 10 - 12 or Claim 14, wherein the scanning beam emitting means is configured to emit a laser beam as a scanning beam and the scanning system is configured to operate as a time-of-flight laser scanning means or a phase-shift laser scanning means.

16. Computer program product, comprising one or more computer readable media having computer-executable instructions for performing the step of registering of the methods according to one of the Claims 1 - 9.
